# EUROPEAN PATENT SPECIFICATION

(11) **EP 4 517 274 B1**
(45) Date of publication and mention of the grant of the patent: **22.04.2026**
(21) Application number: 24194121.0
(22) Date of filing: 12.08.2024
(51) Int. Cl.: G01D 11/24, G01L 19/00, G01L 19/14, G01L 19/06

(54) **SENSOR PACKAGE**
SENSORGEHÄUSE
BOÎTIER DE CAPTEUR

(30) Priority: 29.08.2023 IN 202311057880
(43) Date of publication of application: 05.03.2025
(73) Proprietor: Honeywell International Inc., Charlotte, NC 28202 (US)
(72) Inventor: B, Manjesh Kumar, Charlotte, 28202 (US); DUMPALA, Basavaprashant, Charlotte, 28202 (US); SREERAMU, Sudheer Beligere, Charlotte, 28202 (US); R, Gangaraju, Charlotte, 28202 (US)
(74) Representative: Haseltine Lake Kempner LLP

(56) References cited:
- EP-B1- 0 497 534
- IT-A1- RM 960 059
- JP-B2- 5 840 172
- US-A- 5 807 265

## Description

### FIELD OF THE INVENTION

Exemplary embodiments of the present disclosure relate generally to a sensor package, and more particularly, in some examples, to a sensor package for underwater applications.

### BACKGROUND

Applicant has identified many technical challenges and difficulties associated with a sensor package for underwater applications. Through applied effort, ingenuity, and innovation, Applicant has solved problems relating to improving the performance of the sensor package for underwater applications by developing solutions embodied in the present disclosure, which are described in detail below.

In the prior art, US 5,807,265 A discloses a catheter equipped with a sensor arranged within a chamber filled with silicone gel. EP 0 497 534 B1 describes a sensor housing formed by two parts that are designed to snap together. JP 5-840172 B2 discloses a sensor housing provided with a locking mechanism for securing the connection cables, the cables being encapsulated in a resin.

### BRIEF SUMMARY

Various embodiments described herein relate to a sensor package for underwater applications.

In accordance with the invention, a sensor package is provided. The sensor package includes: a mounting adaptor defining a housing and a port channel connecting with the housing; a sensor assembly positioned in the housing and including a sensing element to sense an ambient environment; a potting material deposited within the housing to encapsulate the sensor assembly; and a locking mechanism positioned in the port channel and configured to clip with the mounting adaptor to prevent seepage of the potting material.

In some embodiments, the sensing element of the sensor assembly is a pressure sensor and is configured to detect a pressure of the ambient environment.

In some embodiments, the sensor package further comprises a terminal connector positioned outside of the mounting adaptor, and a connection wire that electrically couples the sensing element of the sensor assembly to the terminal connector.

In some embodiments, the locking mechanism comprises at least one crush rib configured to clamp around the connection wire.

In some embodiments, the at least one crush rib is crushing radially against the connection wire to prevent the seepage of the potting material and the moisture ingress to the sensor assembly.

In some embodiments, the locking mechanism comprises at least one dovetail groove configured to secure a corresponding dovetail of the mounting adaptor by sliding the corresponding dovetail of the mounting adaptor into the at least one dovetail groove of the locking mechanism.

In some embodiments, the sensor package further comprises a hydrophobic filter configured to prevent fluid to pass through the hydrophobic filter to the sensing element of the sensor assembly and reduce moisture ingress to the sensing element.

In some embodiments, the hydrophobic filter is positioned adjacent to the sensing element.

In some embodiments, the sensor assembly comprises a silicone gel formed between the sensing element of the sensor assembly and a plastic housing of the sensor assembly.

In some embodiments, the sensor assembly further comprises an application specific integrated circuit (ASIC) configured to adjust an analog electrical signal detected by the sensing element of the sensor assembly.

In some embodiments, the ASIC is configured to adjust the analog electrical signal detected by the sensing element by converting the analog electrical signal to a digital electrical signal or amplifying the analog electrical signal.

In accordance with various embodiments of the present disclosure, a sensor package is provided. The sensor package includes, but not limited to: a mounting adaptor defining a housing and a port channel connecting with the housing; a sensor assembly positioned in the housing and configured to sense an ambient environment, wherein the port channel is configured to couple a sensing element of the sensor assembly to a connection wire; a cover on the mounting adaptor to seal the sensor assembly in the housing; and a locking mechanism positioned in the port channel and configured to clip with the mounting adaptor and the connection wire to prevent moisture ingress to the sensor assembly.

In some embodiments, the sensing element is a pressure sensor and is configured to detect a pressure of the ambient environment.

In some embodiments, the sensor package further includes a terminal connector positioned outside of the mounting adaptor, wherein the connection wire electrically couples the sensing element to the terminal connector.

In some embodiments, the locking mechanism comprises a grommet configured to clamp around the connection wire to seal gaps between the port channel and the connection wire.

In some embodiments, the locking mechanism further comprises a flexible bracket configured to clamp to the mounting adaptor to hold the grommet in place.

In some embodiments, the grommet is made of a rubber material of ethylene propylene diene monomer (EPDM), silicone, or flurosilicone.

In some embodiments, the cover is glued to the mounting adaptor by an adhesive to seal the sensor assembly in the housing.

In some embodiments, the sensing element further comprises an application specific integrated circuit (ASIC) configured to adjust an analog electrical signal detected by the sensing element.

In some embodiments, the ASIC is configured to adjust the analog electrical signal detected by the sensing element by converting the analog electrical signal to a digital electrical signal or amplifying the analog electrical signal.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A illustrates a perspective view of an example sensor package, in accordance with various embodiments of the present disclosure;
FIG. 1B illustrates a cross-sectional view of an example sensor package, in accordance with various embodiments of the present disclosure;
FIG. 1C illustrates an exploded view of an example sensor package, in accordance with various embodiments of the present disclosure;
FIG. 2A illustrates a perspective view of an example sensor package, in accordance with various embodiments of the present disclosure;
FIG. 2B illustrates a cross-sectional view of an example sensor package, in accordance with various embodiments of the present disclosure; and
FIG. 2C illustrates an exploded view of an example sensor package, in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as "comprises", "includes", and "having" should be understood to provide support for narrower terms such as "consisting of", "consisting essentially of", and "comprised substantially of".

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

The terms "electronically coupled" or "in electronic communication with" in the present disclosure may refer to two or more electrical elements (for example, but not limited to, an example processing circuitry, communication module, input/output module, memory) and/or electric circuit(s) being connected through wired means (for example, but not limited to, conductive wires or traces) and/or wireless means (for example, but not limited to, wireless network, electromagnetic field), such that electronic indications, signal or the like data and/or information (for example, electronic indications, signals) may be transmitted to and/or received from the electrical elements and/or electric circuit(s) that are electronically coupled.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

Various example embodiments described herein address exemplary technical problems associated with sensor packages. In some examples, such sensor packages are specifically designed for underwater applications. As understood by those of skill in the field to which the present disclosure pertains, for example, performance of sensors may be affected by harsh environment conditions (e.g., submersible conditions in a liquid media or a gaseous media). For example, water and/or moisture may enter the sensor packages and cause the sensors to underperform and/or malfunction. In some examples, the water and/or moisture may also affect the electrical connection between the sensors and terminal connectors.

To address at least these exemplary problems as well as others, example sensor packages described herein improve or otherwise reinforce, in some examples, the water ingress protections for the sensor packages. For example, example sensor packages may include a mounting adaptor defining a housing in the mounting adaptor, and a sensor assembly positioned in the housing and configured to sense an ambient environment. In some examples, example sensor packages may further include a potting material deposited within the housing to encapsulate the sensor assembly. In some examples, the example sensor package may further include a locking mechanism and a hydrophobic filter to seal the sensor assembly in the housing. As a result, the sensor assembly is protected by some or all of the potting material, the locking mechanism, and the hydrophobic filter from the water and/or moisture. Thus, the water ingress into the sensor assembly is reduced, which, in some examples, may therefore improve the performance of the sensor package.

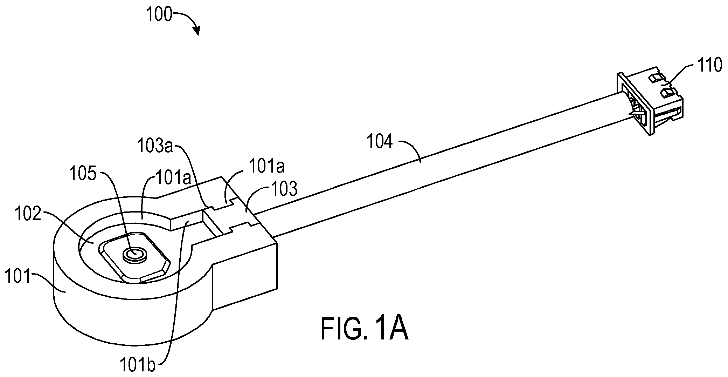

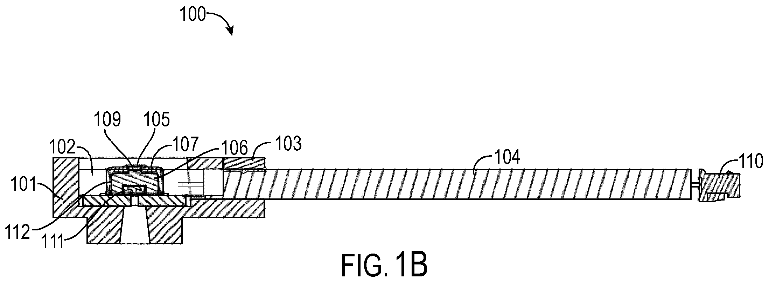

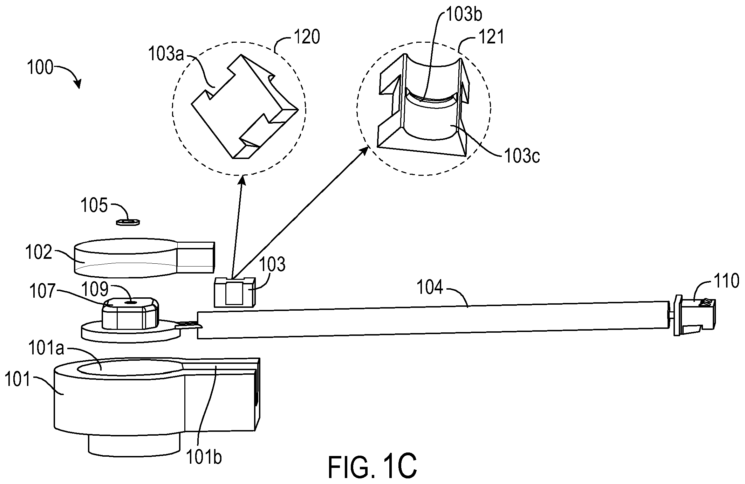

Referring now to FIG. 1A, FIG. 1B, and FIG. 1C, an example diagram illustrating a perspective view of an example sensor package 100, an example diagram illustrating a cross-sectional view of the example sensor package 100, and an example diagram illustrating an exploded view of the example sensor package 100 in accordance with some example embodiments described herein are provided. As illustrated in FIG. 1A, FIG. 1B, and FIG. 1C, in some examples, the example sensor package 100 may comprise a mounting adaptor 101 defining a housing 101a in the mounting adaptor 101 and a sensor assembly 107 positioned in the housing 101a, wherein the sensor assembly 107 may include a sensing element 111 configured to be exposed to an ambient environment to sense the ambient environment. In some examples, the example sensor package 100 may further comprise a potting material 102 deposited within the housing 101a to encapsulate the sensor assembly 107.

In some embodiments, the example sensor package 100 may be mounted to a circuit board (not shown) through the mounting adaptor 101. In some examples, the example sensor package 100 may be electrically coupled to the circuit board.

In some embodiments, the potting material 102 may be a flexible epoxy, a hard epoxy, or other material suitable for inhibiting movement of the sensor assembly 107 within the housing 101a of the mounting adaptor 101. For example, the potting material 102 may be injected into the housing 101a of the mounting adaptor 101 to fill gaps (not shown) between the housing 101a of the mounting adaptor 101 and the sensor assembly 107. In some examples, the potting material 102 may be cured, such that the sensor assembly 107 is encapsulated within the housing 101a of the mounting adaptor 101.

In some embodiments, as shown in FIG. 1A, FIG. 1B, and FIG. 1C, the example sensor package 100 may further comprise a connection wire 104 that electrically couples the sensor assembly 107 to a terminal connector 110.

In some embodiments, as illustrated in FIG. 1A and FIG. 1C, the mounting adaptor 101 may further define a port channel 101b connecting with the housing 101a in the mounting adaptor 101. For example, the connection wire 104 may electrically couple the sensor assembly 107 to the terminal connector 110. In some examples, the terminal connector 110 may be positioned outside of the mounting adaptor 101.

In some examples, the potting material 102 may be further injected into the port channel 101b of the mounting adaptor 101 to fill gaps (not shown) between the port channel 101b of the mounting adaptor 101 and connection wire 104. In some examples, the potting material 102 may be cured, such that the connection wire 104 is encapsulated within the port channel 101b of the mounting adaptor 101.

In some embodiments, as shown in FIG. 1A, FIG. 1B, and FIG. 1C, the example sensor package 100 may further comprise a locking mechanism 103 positioned in the port channel 101b. In some examples, the locking mechanism 103 may be a cable holder to hold the connection wire 104 in place. For example, the locking mechanism 103 may arrest movements of the connection wire 104 with respect to the port channel 101b of the mounting adaptor 101.

In some examples, the locking mechanism 103 may be further configured to clip and/or snap with the mounting adaptor 101 to prevent seepage of the potting material 102 while the potting material 102 is curing and/or potting.

In some examples, as shown in a close-up view 120 of the locking mechanism 103 in FIG. 1C, the locking mechanism 103 may comprise at least one dovetail groove 103a. For example, the at least one dovetail groove 103a may interlock and/or secure a corresponding dovetail 103a of the mounting adaptor 101 in an instance in which the corresponding dovetail 103a of the mounting adaptor 101 is sliding into the at least one dovetail groove 103a of the locking mechanism 103. In some examples, the at least one dovetail groove 103a may have angled edges that interlock and/or secure the corresponding dovetail 103a of the mounting adaptor 101.

In some examples, as shown in a close-up view 121 of the locking mechanism 103 in FIG. 1C, the locking mechanism 103 may further comprise at least one crush rib 103b protruding from an inner surface 103c of the locking mechanism 103. For example, the at least one crush rib 103b may be configured to clamp around the connection wire 104. For example, the at least one crush rib 103b may be deformed in an instance in which the at least one crush rib 103b is crushing radially against the connection wire 104 to further prevent the seepage of the potting material 102 and the moisture ingress to the sensor assembly 107.

In some embodiments, the sensor assembly 107 may be a pressure sensor that may detect, sense, and/or measure a pressure of the ambient environment (e.g., gaseous substance and/or liquid substance). In some embodiments, the sensing element 111 may convert a detected pressure into an analog electrical signal. In some embodiments, the sensing element 111 of the sensor assembly 107 may be a micro-electromechanical system (MEMS) pressure sensing die that is built and packaged using MEMS techniques.

In some examples, the sensor assembly 107 may further comprise an application specific integrated circuit (ASIC) configured to adjust, manipulate, and/or otherwise condition the analog electrical signal detected by the sensing element 111, so that the analog electrical signal meets certain processing requirements. For example, the ASIC may include one or more microprocessors electrically coupled to one or more memory units (such as, but not limited to, random-access memory (RAM), read-only memory (ROM), flash memory, and/or the like). In some examples, the ASIC may adjust, manipulate, and/or otherwise condition the analog electrical signal, and output the adjusted/manipulated/conditioned signal. For example, the ASIC may adjust the analog electrical signal by converting the analog electrical signal to a digital electrical signal or amplifying the analog electrical signal. For example, the analogs electrical signal and/or the adjusted/manipulated/conditioned signal may be coupled to the terminal connector 110.

In some embodiments, as shown in FIG. 1A, FIG. 1B, and FIG. 1C, the example sensor package 100 may further comprise a shield 105 disposed adjacent a detection port 109 of the sensor assembly 107 to transfer the pressure of the ambient environment to the sensing element 111. In some examples, the shield 105 may be configured to prevent the sensing element 111 from direct exposing to moisture and/or water from an ambient environment. For example, the shield 105 may be glued and/or attached to the detection port 109 of the sensor assembly 107, such that the moisture and/or the water from an ambient environment are prevented from entering the sensing element 111 through the detection port 109.

In some examples, the shield 105 may be a hydrophobic filter configured to allow air and/or gas to be vented and prevent fluid and/or water to pass through the hydrophobic filter to the sensor assembly 107. As a result, in some examples, moisture ingress to the sensing element 111 may be reduced.

In some examples, the shield 105 may be a tape configured to seal the sensor assembly 107 from the ambient environment. For example, the tape may be a Kapton tape or a Mylar tape. In some examples, the Kapton tape or the Mylar tape may be configured to transfer stress due to pressure from the ambient environment to the sensing element 111.

In some embodiments, as shown in FIG. 1B, the sensor assembly 107may further comprise a silicone gel 106 deposed between the sensing element 111 of the sensor assembly 107 and a plastic housing 112 of the sensor assembly 107. For example, the silicone gel 106 may be an encapsulating gel, configured to cover the sensing element 111 of the sensor assembly 107. In some examples, the encapsulating gel may be silicone, flourosilicone, or other type of pressure transmitting flexible medium. For example, the silicone gel 106 may protect the sensing element 111 of the sensor assembly 107 from the potting material 102 during a curing process and/or a potting process for the potting material 102.

In some embodiments, the potting material 102 and the shield 105 may effectively encapsulate the sensor housing 111 in the mounting adaptor 101 to protect the sensor assembly 107 from the moisture and/or the water from an ambient environment.

In some examples, the example sensor package 100 may have an ingress protection (IP) in a range of IP68 and/or IP69 protection for submersible applications. For example, the IP68 protection may provide protections against immersion up to 1 meter. For example, the IP69 protection may provide protections against immersion more than 1 meters.

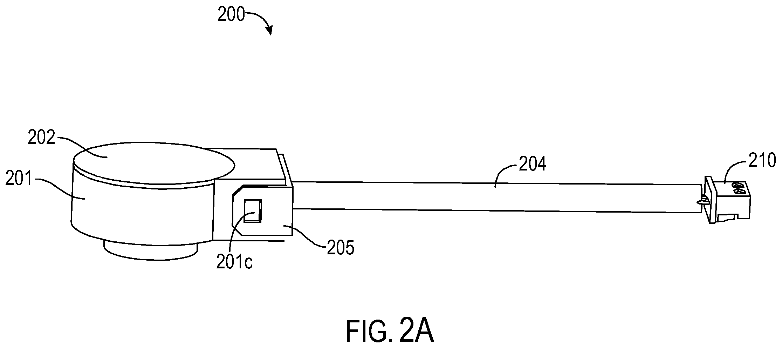

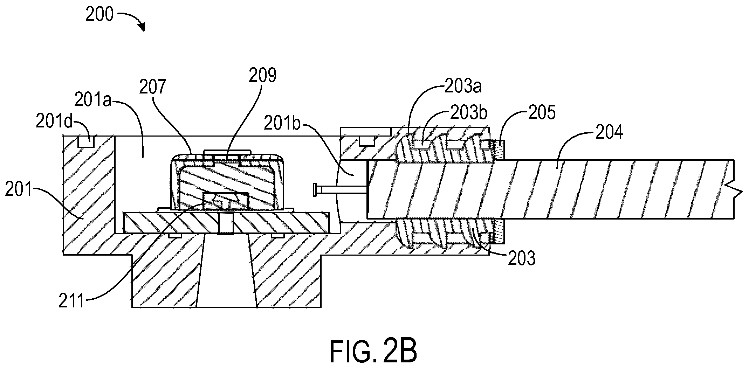

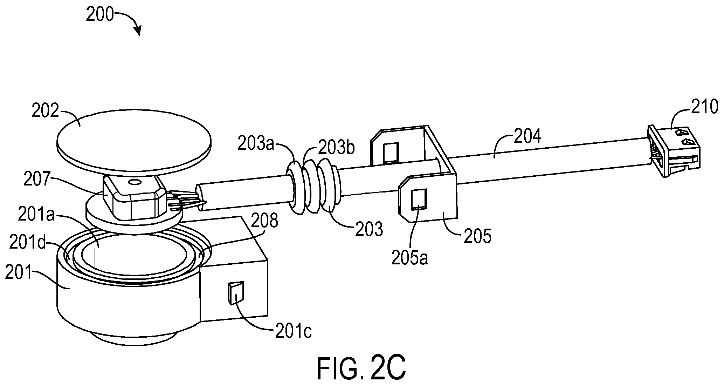

Referring now to FIG. 2A, FIG. 2B, and FIG. 2C, an example diagram illustrating a perspective view of an example sensor package 200, an example diagram illustrating a cross-sectional view of the example sensor package 200, and an example diagram illustrating an exploded view of the example sensor package 200 in accordance with some example embodiments described herein are provided.

As illustrated in FIG. 2A, FIG. 2B, and FIG. 2C, in some examples, the example sensor package 200 may comprise a mounting adaptor 201 defining a housing 201a and a port channel 201b connecting with the housing 201a in the mounting adaptor 201. In some examples, the example sensor package 200 may further comprise a sensor assembly 207 positioned in the housing 201a, where sensor assembly 207 may include a sensing element 211 configured to be exposed to an ambient environment to sense the ambient environment. In some examples, the example sensor package 200 may further comprise a cover 202 on the mounting adaptor 201 to seal the sensor assembly 207 in the housing 201a, and a locking mechanism (203 and/or 205) positioned in the port channel 201b and configured to clip with the mounting adaptor 201 and the connection wire 204 to prevent moisture ingress to the sensor assembly 207.

In some embodiments, the example sensor package 200 may be mounted to a circuit board (not shown) through the mounting adaptor 201. In some examples, the example sensor package 200 may be electrically coupled to the circuit board.

In some embodiments, the connection wire 204 may electrically couple the sensor assembly 207 to a terminal connector 210.

In some embodiments, the connection wire 204 may electrically couple the sensor assembly 207 to the terminal connector 210. In some examples, the terminal connector 210 may be positioned outside of the mounting adaptor 201.

In some embodiments, as shown in FIG. 2B and FIG. 2C, the locking mechanism (203 and/or 205) may comprise a grommet 203 configured to clamp around the connection wire 204 to seal gaps (not shown) between the port channel 201b and the connection wire 204. In some examples, the grommet 203 may be a cable holder to hold the connection wire 204. For example, the grommet 203 may arrest movements of the connection wire 204 with respect to the port channel 201b of the mounting adaptor 201.

In some examples, the grommet 203 may be inserted into the port channel 201b to seal the gaps between the port channel 201b and the connection wire 204, such that the moisture ingress to the sensor assembly 207 is prevented.

In some examples, the grommet 203 may be in an annular shape. In some examples, the grommet 203 may comprise at least one arresting ring 203a protruding from an outer surface 203b of the grommet 203. For example, the at least one arresting ring 203a may be configured to deform in an instance in which the at least one arresting ring 203a is crushing radially against the port channel 201b to prevent the moisture ingress to the sensor assembly 207.

In some examples, the grommet 203 may be made of a rubber material. For example, the grommet 203 may be made of ethylene propylene diene monomer (EPDM), silicone, flurosilicone, and/or the like.

In some embodiments, as shown in FIG. 2A and FIG. 2C, the locking mechanism (203 and/or 205) may further comprise a flexible bracket 205 configured to clamp to the mounting adaptor 201 to hold the grommet 203 in place. In some examples, the flexible bracket 205 may be in a U-shape or a C-shape to accommodate the mounting adaptor 201. For example, the flexible bracket 205 may comprise at least one cut-out 205a configured to secure the mounting adaptor 201 by clamping each of the at least one cut-out 205a to a corresponding protrusion 201c of the mounting adaptor 201.

In some examples, the flexible bracket 205 may push and/or hold the grommet 203 from coming out the port channel 201b to prevent the moisture ingress to the sensor assembly 207. For example, the flexible bracket 205 may push the grommet 203 axially towards the port channel 201b to prevent the grommet 203 from coming out.

In some embodiments, the sensor housing 207 may be a pressure sensor that may detect, sense, and/or measure a pressure of the ambient environment (e.g., gaseous substance and/or liquid substance). In some embodiments, the sensing element 211 may convert a detected pressure into an analog electrical signal. In some embodiments, the sensing element 211 may be a micro-electromechanical system (MEMS) pressure sensing die that is built and packaged using MEMS techniques.

In some examples, the sensor assembly 207 may further comprise an application specific integrated circuit (ASIC) configured to adjust, manipulate, and/or otherwise condition the analog electrical signal detected by the sensing element 211, so that the analog electrical signal meets certain processing requirements. For example, the ASIC may include one or more microprocessors electrically coupled to one or more memory units (such as, but not limited to, random-access memory (RAM), read-only memory (ROM), flash memory, and/or the like). In some examples, the ASIC may adjust, manipulate, and/or otherwise condition the analog electrical signal, and output the adjusted/manipulated/conditioned signal. For example, the ASIC may adjust the analog electrical signal by converting the analog electrical signal to a digital electrical signal or amplifying the analog electrical signal. For example, the analogs electrical signal and/or the adjusted/manipulated/conditioned signal may be coupled to the terminal connector 210.

In some embodiments, as shown in FIG. 2A and FIG. 2C, the mounting adaptor 201 may further define a groove 201d positioned around the housing 201a. In some examples, an adhesive 208 may be applied and/or filled in the groove 201d. For example, as shown in FIG. 2C, the cover 202 may be glued and secured to the mounting adaptor 201 by the adhesive 208 to seal the sensor assembly 207 in the housing 201a.

In some examples, the cover 202 may be made of a material of plastic. In some examples, the cover 202 may be made of a material of metal. In some embodiments, as shown in FIG. 2A and FIG. 2C, the cover 202 may be positioned adjacent a detection port 209 of the sensor assembly 207 to transfer the pressure of the ambient environment to the sensing element 211. In some examples, the cover 202 may be configured to prevent the sensor assembly 207 from exposing to any moisture or water from an ambient environment.

In some examples, the example sensor package 200 may have an ingress protection (IP) in a range of IP68 and/or IP69 protections for submersible applications. For example, the IP68 protection may provide protections against immersion up to 1 meter. For example, the IP69 protection may provide protections against immersion more than 1 meters.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the appended claims. Each and every claim is incorporated as further disclosure into the specification and the claims are embodiment(s) of the present disclosure(s). Furthermore, any advantages and features described above may relate to specific embodiments, but shall not limit the application of such issued claims to processes and structures accomplishing any or all of the above advantages or having any or all of the above features.

Also, techniques, systems, subsystems, and methods described and illustrated in the various embodiments as discrete or separate may be combined or integrated with other systems, modules, techniques, or methods without departing from the scope of the present disclosure. Other objects shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

Many modifications and other embodiments of the disclosures set forth herein will come to mind to one skilled in the art to which these disclosures pertain having the benefit of teachings presented in the foregoing descriptions and the associated drawings. Although the figures only show certain components of the apparatus and systems described herein, it is understood that various other components may be used in conjunction with the supply management system. Therefore, it is to be understood that the disclosures are not to be limited to the specific embodiments disclosed and that modifications and other embodiments are intended to be included within the scope of the appended claims. For example, the various elements or components may be combined or integrated in another system or certain features may be omitted or not implemented. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

## Claims

1. A sensor package, comprising:
a mounting adaptor defining a housing and a port channel connecting with the housing;
a sensor assembly positioned in the housing and including a sensing element to sense an ambient environment;
a potting material deposited within the housing to encapsulate the sensor assembly; and
a locking mechanism positioned in the port channel and configured to clip with the mounting adaptor to prevent seepage of the potting material.

2. The sensor package according to claim 1, wherein the sensing element of the sensor assembly is a pressure sensor and is configured to detect a pressure of the ambient environment.

3. The sensor package according to claim 1, further comprising a terminal connector positioned outside of the mounting adaptor, and a connection wire that electrically couples the sensing element of the sensor assembly to the terminal connector.

4. The sensor package according to claim 3, wherein the locking mechanism comprises at least one crush rib configured to clamp around the connection wire.

5. The sensor package according to claim 4, wherein the at least one crush rib is crushing radially against the connection wire to prevent the seepage of the potting material and the moisture ingress to the sensor assembly.

6. The sensor package according to claim 1, wherein the locking mechanism comprises at least one dovetail groove configured to secure a corresponding dovetail of the mounting adaptor by sliding the corresponding dovetail of the mounting adaptor into the at least one dovetail groove of the locking mechanism.

7. The sensor package according to claim 1, further comprising a hydrophobic filter configured to prevent fluid to pass through the hydrophobic filter to the sensing element of the sensor assembly and reduce moisture ingress to the sensing element.

8. The sensor package according to claim 7, wherein the hydrophobic filter is positioned adjacent to the sensing element.

9. The sensor package according to claim 1, wherein the sensor assembly comprises a silicone gel formed between the sensing element of the sensor assembly and a plastic housing of the sensor assembly.

10. The sensor package according to claim 1, wherein the sensor assembly further comprises an application specific integrated circuit (ASIC) configured to adjust an analog electrical signal detected by the sensing element of the sensor assembly.

11. The sensor package according to claim 10, wherein the ASIC is configured to adjust the analog electrical signal detected by the sensing element by converting the analog electrical signal to a digital electrical signal or amplifying the analog electrical signal.

## Patentansprüche

1. Sensorpaket, umfassend:
einen Montageadapter, der ein Gehäuse und einen Anschlusskanal, der sich mit dem Gehäuse verbindet, definiert;
eine Sensorbaugruppe, die in dem Gehäuse positioniert ist und ein Abtastelement beinhaltet, um eine umgebende Umwelt abzutasten;
ein Vergussmaterial, das innerhalb des Gehäuses aufgetragen ist, um die Sensorbaugruppe einzukapseln; und
einen Verriegelungsmechanismus, der in dem Anschlusskanal positioniert und dazu konfiguriert ist, in den Montageadapter einzurasten, um ein Aussickern des Vergussmaterials zu verhindern.

2. Sensorpaket nach Anspruch 1, wobei das Abtastelement der Sensorbaugruppe ein Drucksensor ist und dazu konfiguriert ist, einen Druck der umgebenden Umwelt zu erkennen.

3. Sensorpaket nach Anspruch 1, ferner umfassend einen Endgerätverbinder, der außerhalb des Montageadapters positioniert ist, und ein Verbindungskabel, das das Abtastelement der Sensorbaugruppe elektrisch mit dem Endgerätverbinder koppelt.

4. Sensorpaket nach Anspruch 3, wobei der Verriegelungsmechanismus mindestens eine Quetschrippe umfasst, die dazu konfiguriert ist, sich um das Verbindungskabel herum zu klemmen.

5. Sensorpaket nach Anspruch 4, wobei die mindestens eine Quetschrippe sich radial gegen das Verbindungskabel quetscht, um das Aussickern des Vergussmaterials und den Feuchtigkeitseintritt in die Sensorbaugruppe zu verhindern.

6. Sensorpaket nach Anspruch 1, wobei der Verriegelungsmechanismus mindestens eine Schwalbenschwanznut umfasst, die dazu konfiguriert ist, einen entsprechenden Schwalbenschwanz des Montageadapters durch Schieben des entsprechenden Schwalbenschwanzes des Montageadapters in die mindestens eine Schwalbenschwanznut des Verriegelungsmechanismus zu fixieren.

7. Sensorpaket nach Anspruch 1, ferner umfassend einen hydrophoben Filter, der dazu konfiguriert ist, zu verhindern, dass Fluid durch den hydrophoben Filter zu dem Abtastelement der Sensorbaugruppe gelangt, und Feuchtigkeitseintritt in das Abtastelement zu reduzieren.

8. Sensorpaket nach Anspruch 7, wobei der hydrophobe Filter benachbart zu dem Sensorelement positioniert ist.

9. Sensorpaket nach Anspruch 1, wobei die Sensorbaugruppe ein Silikongel umfasst, das zwischen dem Abtastelement der Sensorbaugruppe und einem Kunststoffgehäuse der Sensorbaugruppe ausgebildet ist.

10. Sensorpaket nach Anspruch 1, wobei die Sensorbaugruppe ferner eine anwendungsspezifische integrierte Schaltung (ASIC) umfasst, die dazu konfiguriert ist, ein analoges elektrisches Signal, das von dem Abtastelement der Sensorbaugruppe erkannt wird, anzupassen.

11. Sensorpaket nach Anspruch 10, wobei die ASIC dazu konfiguriert ist, das analoge elektrische Signal, das von dem Abtastelement erkannt wird, durch Wandeln des analogen elektrischen Signals in ein digitales elektrisches Signal oder durch Verstärken des analogen elektrischen Signals anzupassen.

## Revendications

1. Boîtier de capteur, comprenant :
un adaptateur de montage définissant un logement et un canal d'orifice en liaison avec le logement ;
un ensemble capteur positionné dans le logement et incluant un élément de détection pour détecter un environnement ambiant ;
une matière d'enrobage déposée à l'intérieur du logement pour encapsuler l'ensemble capteur ; et
un mécanisme de verrouillage positionné dans le canal d'orifice et configuré pour se fixer à l'adaptateur de montage pour empêcher la pénétration de la matière d'enrobage.

2. Boîtier de capteur selon la revendication 1, dans lequel l'élément de détection de l'ensemble capteur est un capteur de pression et est configuré pour détecter une pression de l'environnement ambiant.

3. Boîtier de capteur selon la revendication 1, comprenant en outre un connecteur terminal positionné à l'extérieur de l'adaptateur de montage, et un fil de connexion qui couple électriquement l'élément de détection de l'ensemble capteur au connecteur terminal.

4. Boîtier de capteur selon la revendication 3, dans lequel le mécanisme de verrouillage comprend au moins une nervure de compression configurée pour enserrer le fil de connexion.

5. Boîtier de capteur selon la revendication 4, dans lequel l'au moins une nervure de compression comprime radialement le fil de connexion pour empêcher la pénétration de la matière d'enrobage et l'infiltration d'humidité dans l'ensemble de capteur.

6. Boîtier de capteur selon la revendication 1, dans lequel le mécanisme de verrouillage comprend au moins une rainure à queue d'aronde configurée pour fixer une queue d'aronde correspondante de l'adaptateur de montage par glissement de la queue d'aronde correspondante de l'adaptateur de montage dans l'au moins une rainure à queue d'aronde du mécanisme de verrouillage.

7. Boîtier de capteur selon la revendication 1, comprenant en outre un filtre hydrophobe configuré pour empêcher le fluide de traverser le filtre hydrophobe jusqu'à l'élément de détection de l'ensemble capteur et réduire l'infiltration d'humidité dans l'élément de détection.

8. Boîtier de capteur selon la revendication 7, dans lequel le filtre hydrophobe est positionné de manière adjacente à l'élément de détection.

9. Boîtier de capteur selon la revendication 1, dans lequel l'ensemble capteur comprend un gel de silicone formé entre l'élément de détection de l'ensemble capteur et un logement en plastique de l'ensemble capteur.

10. Boîtier de capteur selon la revendication 1, dans lequel l'ensemble capteur comprend en outre un circuit intégré spécifique à une application (ASIC) configuré pour ajuster un signal électrique analogique détecté par l'élément de détection de l'ensemble capteur.

11. Boîtier de capteur selon la revendication 10, dans lequel l'ASIC est configuré pour ajuster le signal électrique analogique détecté par l'élément de détection en convertissant le signal électrique analogique en un signal électrique numérique ou en amplifiant le signal électrique analogique.
